# EUROPEAN PATENT APPLICATION

(11) **EP 4 603 427 A1**
(43) Date of publication of application: **20.08.2025**
(21) Application number: 23955353.0
(22) Date of filing: 19.12.2023
(51) Int. Cl.: B65G 47/00, B65G 61/00, H01M 10/04

(54) **CLAMPING ASSEMBLY, GRABBING DEVICE, BATTERY PRODUCTION LINE, CLAMPING METHOD, AND TRANSFER METHOD**

(30) Priority: 13.10.2023 CN 202311323034
(71) Applicant: CONTEMPORARY AMPEREX TECHNOLOGY (HONG KONG) LIMITED, Hong Kong (HK)
(72) Inventor: XU, Yanjun, Ningde, Fujian 352100 (CN); ZHENG, Panze, Ningde, Fujian 352100 (CN); ZHANG, Ben, Ningde, Fujian 352100 (CN)
(74) Representative: Kraus & Lederer PartGmbB
(86) International application number: PCT/CN2023/139992
(87) International publication number: WO 2025/077015

(57) **Abstract**

A clamping module, a grabbing device, a battery production line, a clamping method, and a transfer method are disclosed, pertaining to the field of battery production technologies. A clamping jaw (21) includes a first clamping piece (211) and a second clamping piece (212). A direction in which the first clamping piece and the second clamping piece are arranged opposite each other is a first direction. A first drive component (22) is configured to drive the first clamping piece to move along the first direction. A mounting base (23) is arranged on the second clamping piece. The second clamping piece is able to move relative to the mounting base along the first direction. The mounting base is provided with a force applying portion (231) that is spaced away from the second clamping piece. An elastic member (24) is in contact with the second clamping piece and the force applying portion. A second drive component is configured to drive the mounting base to move along the first direction, so that a direction of an acting force applied by the elastic member to the second clamping piece is toward the first clamping piece. The first drive component and the second drive component independently perform driving, and the elastic member performs buffering, so that a battery cell can be stably grabbed with damage to the battery cell minimized.

## Description

### CROSS-REFERENCE TO RELATED APPLICATIONS

This disclosure claims priority to Chinese Patent Application No. 202311323034.X, filed on October 13, 2023 and entitled "CLAMPING MODULE, GRABBING DEVICE, BATTERY PRODUCTION LINE, CLAMPING METHOD, AND TRANSFER METHOD", which is incorporated herein by reference in its entirety.

### TECHNICAL FIELD

This disclosure relates to the field of battery production technologies, and in particular, to a clamping module, a grabbing device, a battery production line, a clamping method, and a transfer method.

### BACKGROUND

New energy batteries are increasingly widely used in life and industry. For example, new energy vehicles equipped with batteries have been widely used. In addition, batteries are further increasingly used in the field of energy storage and the like.

In the related art, in a process of grabbing a cell (also referred to as a battery cell), a grabbing device may damage the battery cell or may be unable to stably grab the battery cell.

### SUMMARY

To resolve the foregoing technical problems, this disclosure provides a clamping module, a grabbing device, a battery production line, a clamping method, and a transfer method, to reduce a possibility of battery damage while stably grabbing a battery cell.

This disclosure is implemented by using the following technical solutions.

A first aspect of embodiments of this disclosure provides a clamping module, including:
a clamping jaw, including a first clamping piece and a second clamping piece that are arranged opposite each other, where a direction in which the first clamping piece and the second clamping piece are arranged opposite each other is a first direction;
a first drive component, configured to drive the first clamping piece to move along the first direction;
a mounting base arranged on the second clamping piece, where the second clamping piece is able to move relative to the mounting base along the first direction, and the mounting base is provided with a force applying portion that is spaced away from the second clamping piece;
an elastic member in contact with the second clamping piece and the force applying portion, to enable the force applying portion to apply an acting force to the second clamping piece through the elastic member; and
a second drive component, configured to drive the mounting base to move along the first direction, so that a direction of the acting force applied by the elastic member to the second clamping piece is toward the first clamping piece.

In this embodiment of this disclosure, the first drive component and the second drive component independently drive the first clamping piece and the mounting base, so that the clamping jaw can stably clamp a battery cell while minimizing damage to the battery cell.

In an embodiment, the force applying portion is located on a side of the second clamping piece that is away from the first clamping piece along the first direction.

In this embodiment of this disclosure, the elastic member is at least partially located on the side of the second clamping piece that is away from the first clamping piece along the first direction, so that space originally formed between the mounting base and the side of the second clamping piece that is away from the first clamping piece along the first direction is fully utilized.

In an embodiment, the mounting base is further provided with a position limiting portion, the position limiting portion is located on a side of the force applying portion that faces the first clamping piece along the first direction, the second clamping piece is located between the position limiting portion and the force applying portion along the first direction, and the second clamping piece abuts against the position limiting portion under the action of an elastic force of the elastic member.

In this embodiment of this disclosure, the second clamping piece is pressed against the position limiting portion by the elastic force of the compressed elastic member, so that shaking of the second clamping piece between the position limiting portion and the elastic member is reduced.

In an embodiment, the elastic member is located on a side of the second clamping piece that is away from the position limiting portion, and the elastic member is located between the second clamping piece and the force applying portion.

In this embodiment of this disclosure, the elastic member is fully located in space originally formed between the force applying portion and a side of the second clamping piece that is away from the first clamping piece, and the space between the force applying portion and the side of the second clamping piece that is away from the first clamping piece is fully utilized to accommodate the elastic member, so that space utilization is improved.

A second aspect of embodiments of this disclosure provides a grabbing device, including:
a frame;
clamping assemblies arranged on the frame, where there are at least two clamping assemblies, each clamping assembly includes a base and the clamping module according to any one of the foregoing implementations, at least two clamping assemblies are arranged along a second direction, the second direction intersects with the first direction, the first drive component, the second drive component, the first clamping piece, and the mounting base are all arranged on the base, the first drive component drives the first clamping piece to move relative to the base, the second drive component drives the mounting base to move relative to the base, each clamping assembly has at least one clamping module, and each clamping module of each clamping assembly and a corresponding clamping module of another corresponding clamping assembly are arranged along the second direction; and
a drive assembly arranged on the frame, where the drive assembly is configured to drive one clamping assembly to move relative to another clamping assembly along the second direction.

In this embodiment of this disclosure, the drive assembly drives one clamping assembly to move relative to another clamping assembly, so that a distance between each clamping module of each clamping assembly and a corresponding clamping module of another corresponding clamping assembly along the second direction can be adjusted, to clamp battery cells at different spacings on the same conveying apparatus.

In an embodiment, each clamping assembly has a plurality of clamping modules, and clamping jaws of the plurality of clamping modules are arranged at spacings along the first direction.

In this embodiment of this disclosure, the plurality of clamping modules may jointly grab battery cells on a plurality of conveying apparatuses, to improve efficiency of grabbing battery cells.

In an embodiment, each clamping assembly has two clamping modules, two second clamping pieces corresponding to the two clamping modules are located between two first clamping pieces along the first direction, two corresponding mounting bases are located between the two first clamping pieces along the first direction, and the second drive component is located on a side of the mounting base along the second direction.

In this embodiment of this disclosure, two corresponding mounting bases are located between two first clamping pieces along the first direction, the second drive component is located on a side of the mounting base along the second direction, and a spacing between the two mounting bases at limiting positions away from the first clamping pieces along the first direction can be arranged to be small, to help reduce an overall size of the grabbing device along the first direction.

In an embodiment, a second drive component of a clamping module of each clamping assembly is located on a side of a corresponding mounting base that is away from another corresponding clamping assembly along the second direction, and two second drive components corresponding to two clamping modules are located between two first clamping pieces along the first direction.

In this embodiment of this disclosure, a second drive component of a clamping module of each clamping assembly is located on a side of a corresponding mounting base that is away from another corresponding clamping assembly along the second direction, and the two clamping assemblies can approach each other as close as possible along the second direction. This helps grab battery cells at different spacings on the same conveying apparatus within a larger spacing range.

In an embodiment, a drive portion is formed at an end of each second drive component that faces a corresponding first clamping piece, the drive portion is connected to an end of a corresponding mounting base that faces a corresponding first clamping piece, and two second drive components are located between two drive portions along the first direction.

In this embodiment of this disclosure, because the drive portion is connected to an end of a corresponding mounting base that faces a corresponding first clamping piece, two mounting bases with large sizes along the first direction can be arranged in a region between two drive portions along the first direction, so that the region between the two drive portions spaced apart along the first direction can be fully utilized, to improve space utilization.

In an embodiment, the clamping assembly further includes a stop mechanism, the stop mechanism is located between two mounting bases along the first direction, and the stop mechanism is able to abut against the two mounting bases along the first direction to prevent the two mounting bases from approaching each other.

In this embodiment of this disclosure, the stop mechanism abuts against the two mounting bases, so that a possibility of interference between the two mounting bases 23 due to approaching is reduced.

In an embodiment, the stop mechanism includes:
a supporting base connected to the base;
a stop rod passing through the supporting base, where each mounting base is correspondingly provided with the stop rod, and the stop rod is configured to abut against a corresponding mounting base; and
a locking piece in threaded connection to a corresponding stop rod, where each stop rod is correspondingly provided with two locking pieces, one locking piece is located on a side of the supporting base along the first direction, and the other locking piece is located on the other side of the supporting base along the first direction.

In this embodiment of this disclosure, a stop rod corresponding to each mounting base passes through the supporting base, and two side locking pieces corresponding to each stop rod are in threaded connection to the stop rod, so that the stop rod is fastened to the supporting base. When one stop rod is damaged, the corresponding stop rod may be removed and replaced with a new stop rod, without replacing the entire stop mechanism. This helps reduce maintenance costs.

In an embodiment, a base of one clamping assembly is connected to the frame, and a base of another clamping assembly is movably arranged on the frame.

In this embodiment of this disclosure, because a base of one clamping assembly is connected to the frame, the corresponding clamping assembly does not move relative to the base. This helps simplify an assembly structure between the corresponding clamping assembly and the base. One of two clamping assemblies moves relative to the base, and the other clamping assembly does not move relative to the base, so that one clamping assembly can move relative to the other clamping assembly, and an assembly structure between the clamping assemblies and the base can also be simplified.

In an embodiment, the base includes:
a main base, where the second drive component, the first clamping piece, and the mounting base are all arranged on the main base; and
a position limiting base connected to the main base, where both the position limiting base and the first drive component are located on a side of the first clamping piece that is away from the second clamping piece along the first direction, the first drive component is mounted on the position limiting base, and the first drive component is able to drive the first clamping piece to move to abut against the position limiting base.

In this embodiment of this disclosure, the position limiting base is located at an end of the first clamping piece that is away from the second clamping piece, and the position limiting base can abut against the first clamping piece for position limiting, to prevent the first clamping piece from excessively moving away from the second clamping piece by a long distance. The first drive component is mounted on the position limiting base located on the side of the first clamping piece that is away from the second clamping piece. This facilitates mounting of the first drive component. In addition, the first drive component mounted on the position limiting base is located on the side of the first clamping piece that is away from the second clamping piece, so that the first drive component can smoothly push the first clamping piece to move along the first direction.

A third aspect of embodiments of this disclosure provides a battery production line, including:
a conveying apparatus, configured to convey a battery cell;
the grabbing device according to any one of the foregoing implementations, configured to grab the battery cell conveyed by the conveying apparatus;
a stacking table, configured to receive the battery cell grabbed by the grabbing device from the conveying apparatus, to pre-stack the battery cell; and
a transfer device, configured to drive the grabbing device to reciprocate between the conveying apparatus and the stacking table.

In this embodiment of this disclosure, the first drive component and the second drive component independently perform driving, so that the grabbing device can stably grab the battery cell on the conveying apparatus to the stacking table for stacking while minimizing damage to the battery cell.

A fourth aspect of embodiments of this disclosure provides a clamping method, including:
driving, by using a first drive component, a first clamping piece to move to get in contact with a battery cell;
driving, by using a second drive component, a mounting base to move, so that a second clamping piece moves to get in contact with the battery cell;
when the battery cell located between the first clamping piece and the second clamping piece is in contact with the first clamping piece and the second clamping piece, stopping driving, by using the first drive component, the first clamping piece to move; and
driving, by using the second drive component, the mounting base to move to a preset clamping position toward the first clamping piece that stops moving.

In this embodiment of this disclosure, the first drive component and the second drive component independently perform driving, so that the battery cell can be stably grabbed with operations on the battery cell minimized.

A fifth aspect of embodiments of this disclosure provides a transfer method, including:
driving, by using a transfer device, a grabbing device to move to a to-be-grabbed material position on a conveying apparatus, so that a battery cell is located between a first clamping piece and a corresponding second clamping piece;
driving, by using a first drive component, the first clamping piece to move to get in contact with the battery cell;
driving, by using a second drive component, a mounting base to move, so that the second clamping piece moves to get in contact with the battery cell;
when the battery cell located between the first clamping piece and the second clamping piece is in contact with the first clamping piece and the second clamping piece, stopping driving, by using the first drive component, the first clamping piece to move;
driving, by using the second drive component, the mounting base to move, so that the second clamping piece moves to a preset clamping position toward the first clamping piece that stops moving; and
transferring, by using the transfer device, the battery cell grabbed by the grabbing device to a stacking table for stacking.

In this embodiment of this disclosure, the first drive component and the second drive component independently perform driving, so that the grabbing device can stably grab the battery cell on the conveying apparatus to the stacking table for stacking while minimizing damage to the battery cell.

In an embodiment, the transfer method further includes:
driving, by using a drive assembly, one of two clamping assemblies to move relative to the other clamping assembly, so that a spacing between two clamping jaws arranged along a second direction is suitable for grabbing assembled battery cells on the conveying apparatus.

In this embodiment of this disclosure, the drive assembly drives the clamping assembly to move, to adapt to battery cells with different specifications on the conveying apparatus.

In an embodiment, there are two conveying apparatuses, the two conveying apparatuses are arranged in parallel, each clamping assembly has two clamping modules, the two clamping modules of each clamping assembly are in a one-to-one correspondence to the conveying apparatuses, and a pole of a battery cell on each conveying apparatus faces the other corresponding conveying apparatus; and
the transferring, by using the transfer device, the battery cell grabbed by the grabbing device to a stacking table for stacking includes:
driving, by using the transfer device, the grabbing device to move away from the conveying apparatus, so that the grabbing device is located at a position able to prevent the grabbing device from interfering with the conveying apparatus during rotation;
driving, by using the transfer device, the grabbing device to rotate, so that a pole of the battery cell grabbed by the grabbing device is arranged along a vertical direction;
performing stacking: driving, by using the transfer device, the grabbing device to move, so that the grabbing device transfers the grabbed battery cell whose pole faces upward to the stacking table for stacking and release; and
when battery cells grabbed by the grabbing device are not all released, driving, by using the transfer device, the grabbing device that has released a battery cell to rotate in an avoidance region, so that a pole of a battery cell grabbed by the grabbing device faces upward for performing the stacking step.

In this embodiment of this disclosure, stacking is performed twice through rotation of the grabbing device, so that poles of all battery cells placed on the stacking table can be arranged upward.

In an embodiment, the transferring, by using the transfer device, the battery cell grabbed by the grabbing device to a stacking table for stacking further includes:
when the battery cell grabbed by the grabbing device is single-row-assembled battery cells, driving, by using the drive assembly, one of two clamping assemblies to move relative to the other clamping assembly, so that a spacing between two clamping jaws arranged along the second direction is suitable for placing the single-row-assembled battery cells to a corresponding position on the stacking table.

In this embodiment of this disclosure, the drive assembly drives the clamping assembly to move, so that a spacing between single-row-assembled battery cells grabbed by the grabbing device can adapt to a placement position, on the stacking table, at which the single-row-assembled battery cells are to be stacked.

### Effects of invention

In a clamping module in the embodiments of this disclosure, before a clamping jaw clamps a battery cell, the battery cell is located between a first clamping piece and a second clamping piece along a first direction, and the battery cell is spaced away from the first clamping piece and the second clamping piece by a specific distance along the first direction. In this way, in a process in which the clamping jaw moves downward to a position at which the battery cell can be grabbed, a possibility that the first clamping piece and the second clamping piece press against the battery cell and cause damage to the battery cell can be reduced. Because the battery cell is spaced away from the first clamping piece and the second clamping piece by a specific distance along the first direction, a first drive component needs to drive the first clamping piece to move along the first direction to a position for contact with the battery cell, and a second drive component needs to drive a mounting base to move along the first direction to enable the second clamping piece to move to a position for contact with the battery cell. When the battery cell is in contact with the first clamping piece and the second clamping piece, the first drive component stops driving the first clamping piece to move along the first direction, and the second drive component drives the mounting base to move toward the first clamping piece, so that a force applying portion of the mounting base gradually increases, through an elastic member, an acting force applied to the second clamping piece. A clamping force applied by the first clamping piece and the second clamping piece to clamp the battery cell is gradually increased to a required clamping force through buffering and adjustment by the elastic member, to reduce a possibility that the clamping force applied by the first clamping piece and the second clamping piece to the battery cell is excessively large and causes damage to the battery cell. In addition, the second drive component drives the mounting base to move to gradually increase the clamping force, so that the battery cell can be stably clamped. In a process in which the second drive component drives the mounting base to move toward the first clamping piece to enable the force applying portion of the mounting base to gradually increase, through the elastic member, the acting force applied to the second clamping piece, because the first drive component drives the first clamping piece to move and no corresponding elastic member is arranged between the first drive component and the first clamping piece, the first drive component rigidly drives the first clamping piece, and a position to which the first drive component performs driving determines a position of the first clamping piece. This can reduce shaking of the battery cell clamped between the first clamping piece and the second clamping piece, and help stably clamp the battery cell.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this disclosure. Moreover, same reference signs are used to represent same components throughout the accompanying drawings. In the accompanying drawings:
FIG. 1 is a schematic diagram of two conveying apparatuses arranged in parallel according to an embodiment of this disclosure;
FIG. 2 is a first schematic diagram of a stacking status of battery cells on a stacking table according to an embodiment of this disclosure, where this figure shows a stacking status of single-row-assembled battery cells on the stacking table;
FIG. 3 is a second schematic diagram of a stacking status of battery cells on a stacking table according to an embodiment of this disclosure, where this figure shows a stacking status of double-row-assembled battery cells on the stacking table;
FIG. 4 is a first schematic structural diagram of a grabbing device according to an embodiment of this disclosure, where this figure shows a drive assembly;
FIG. 5 is a second schematic structural diagram of a grabbing device according to an embodiment of this disclosure, where this figure shows no drive assembly;
FIG. 6 is an enlarged view of a position A in FIG. 5;
FIG. 7 is an exploded view of a grabbing device according to an embodiment of this disclosure;
FIG. 8 is a schematic structural diagram of a clamping assembly according to an embodiment of this disclosure;
FIG. 9 is an assembly diagram of a mounting base, an elastic member, and a second clamping piece according to an embodiment of this disclosure;
FIG. 10 is a schematic structural diagram of a stop mechanism according to an embodiment of this disclosure;
FIG. 11 is a flowchart of a clamping method according to an embodiment of this disclosure;
FIG. 12 is a first flowchart of a transfer method according to an embodiment of this disclosure;
FIG. 13 is a second flowchart of a transfer method according to an embodiment of this disclosure; and
FIG. 14 is a third flowchart of a transfer method according to an embodiment of this disclosure.

Reference signs are described as follows:
100: frame; 200: clamping assembly; 1: base; 11: main base; 12: position limiting base; 2: clamping module; 21: clamping jaw; 211: first clamping piece; 212: second clamping piece; 22: first drive component; 23: mounting base; 231: force applying portion; 232: position limiting portion; 24: elastic member; 25: second drive component; 251: drive portion; 3: stop mechanism; 31: supporting base; 32: stop rod; 33: locking piece; 300: drive assembly; 400: conveying apparatus; 500: stacking table; and 600: battery cell.

### DESCRIPTION OF EMBODIMENTS

Embodiments of technical solutions of this disclosure are described in detail below with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used in this specification shall have the same meanings as commonly understood by persons skilled in the art to which this disclosure belongs. The terms used in this specification are merely intended to describe the specific embodiments rather than to limit this disclosure. The terms "include", "have", and any other variations thereof in the embodiments of this disclosure are intended to cover non-exclusive inclusions.

In the description of the embodiments of this disclosure, the technical terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means two or more, unless otherwise explicitly and specifically defined.

An "embodiment" mentioned in this specification indicates that a particular feature, structure, or characteristic described with reference to the embodiment may be included in at least one embodiment of this disclosure. The term appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification usually indicates an "or" relationship between the associated objects.

In the description of the embodiments of this disclosure, unless otherwise specified and defined explicitly, the technical terms "mounting", "connection", "join", "fastening", and the like should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in this disclosure as appropriate to specific situations.

In the description of the embodiments of this disclosure, unless otherwise specified and defined explicitly, the technical term "contact" should be understood in its general sense. It may refer to direct contact, contact via an intermediate medium layer, contact with no interaction between two elements that are in contact, or contact with an interaction between two elements that are in contact.

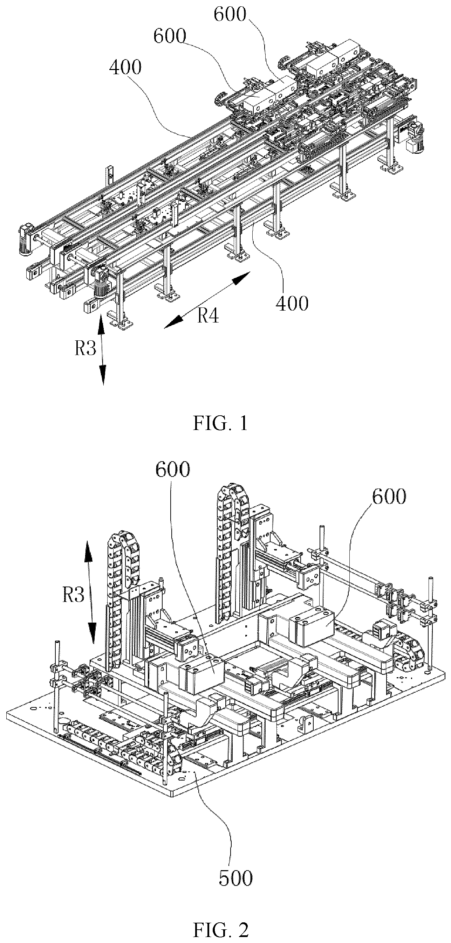

In the description of the embodiments of this disclosure, the orientations or positional relationships indicated by "above", "below", "top", and "bottom" are based on the orientations or positional relationships shown in FIG. 1 to FIG. 3. It can be understood that these orientation terms are merely for ease and brevity of description of this disclosure rather than indicating or implying that the means or components mentioned must have specific orientations or must be constructed or manipulated according to specific orientations, and therefore shall not be construed as any limitation on this disclosure.

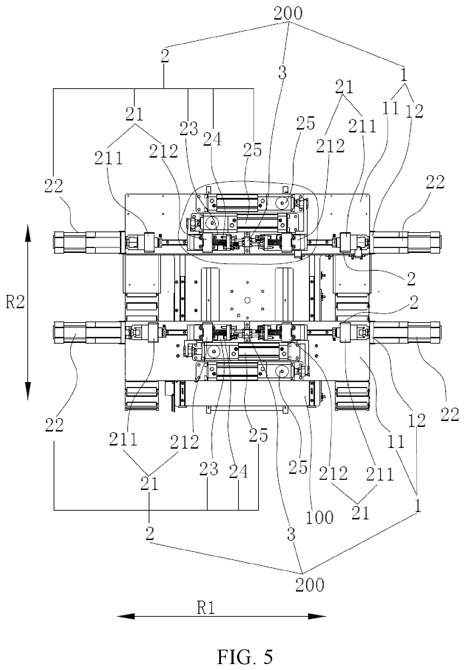

In the embodiments of this disclosure, as shown in FIG. 5, a first direction is a direction indicated by an arrow R1 in the figure.

In the embodiments of this disclosure, as shown in FIG. 5, a second direction is a direction indicated by an arrow R2 in the figure.

In the embodiments of this disclosure, as shown in FIG. 1 to FIG. 3, a vertical direction is a direction indicated by an arrow R3 in the figures.

In the embodiments of this disclosure, as shown in FIG. 1, a conveying direction of a conveying apparatus is a direction indicated by an arrow R4 in the figure.

As a part of a creative concept of this disclosure, before the embodiments of this disclosure are described, a reason why a grabbing device may damage a battery cell or be unable to stably grab the battery cell in a process of grabbing the battery cell in the related art is analyzed, to obtain the technical solutions in the embodiments of the disclosure through appropriate analysis.

In the related art, a battery cell is clamped between a first clamping piece and a second clamping piece by the first clamping piece and the second clamping piece. When clamping forces applied to the first clamping piece and the second clamping piece are not buffered or adjusted by an elastic member, a small change in a distance between the first clamping piece and the second clamping piece may cause large fluctuation in the clamping forces, and it is difficult to accurately control clamping forces applied by the first clamping piece and the second clamping piece to the battery cell. Consequently, the battery cell may be damaged, or the battery cell may not be tightly clamped. When the clamping forces applied to the first clamping piece and the second clamping piece are buffered and adjusted by the elastic member, both the first clamping piece and the second clamping piece are affected by an elastic force of the elastic member. Consequently, positions of the first clamping piece and the second clamping piece are uncertain. This may cause shaking of the battery cell clamped by the first clamping piece and the second clamping piece, and it is difficult for the first clamping piece and the second clamping piece to stably grab the battery cell. In addition, there is a linkage relationship between the first clamping piece and the second clamping piece. The first clamping piece and the second clamping piece are not independently driven, and a position of the battery cell on a conveying apparatus is fixed after the conveying apparatus conveys the battery cell to a corresponding to-be-grabbed position. In a case that an acting force applied to the first clamping piece is not buffered or adjusted by the elastic member, an acting force applied to the second clamping piece can be buffered and adjusted by the elastic member, and both the first clamping piece and the second clamping piece are in contact with the battery cell, because the first clamping piece and the second clamping piece are not independently driven, the battery cell at the fixed position on the conveying apparatus may be damaged due to extrusion by the first clamping piece.

In the embodiments of the disclosure, a first clamping piece and a second clamping piece are independently driven, and a clamping force applied to the second clamping piece is buffered and adjusted by an elastic member. In a process of clamping a battery cell, a first drive component drives the first clamping piece to get in contact with the battery cell, and a second drive component drives a mounting base to move to enable the second clamping piece to get in contact with the battery cell. When the battery cell is in contact with the corresponding first clamping piece and the corresponding second clamping piece, the first drive component stops driving the first clamping piece to move, to prevent the battery cell from being damaged by a clamping force applied by the first drive component to the first clamping piece without buffering or adjustment, and the second drive component drives the mounting base to move. A force applying portion of the moving mounting base applies a corresponding clamping force to the second clamping piece by compressing the elastic member. A degree of compressing the elastic member to apply the clamping force is adjustable, and a clamping force applied to the first clamping piece is not buffered or adjusted by the elastic member, so that a position of the first clamping piece is certain. This can reduce a degree of shaking of the battery cell, and help stably grab the battery cell.

The solutions in the embodiments of this disclosure may be applied to but are limited to grabbing of a battery cell 600, and are also applicable to grabbing of other easily damaged objects.

An electric apparatus is an apparatus that uses electricity as energy and consumes electricity to implement a corresponding function. For example, the electric apparatus may be but is not limited to a mobile phone, a tablet computer, a notebook computer, an electric toy, an electric tool, an electric bicycle, an electric vehicle, a ship, a spacecraft, and the like. The electric toy may be a fixed or mobile electric toy, for example, a game console, an electric toy car, an electric toy ship, and an electric toy airplane. The spacecraft may include an airplane, a rocket, a space shuttle, a spaceship, and the like.

An example in which an electric apparatus according to an embodiment of this disclosure is a vehicle is used for description.

A vehicle provided in an embodiment of this disclosure may be an oil-fueled vehicle, a gas-powered vehicle, or a new energy vehicle. The new energy vehicle may be a battery electric vehicle, a hybrid electric vehicle, an extended-range electric vehicle, or the like. The vehicle is provided with a battery pack inside, and the battery pack may be arranged at the bottom, front, or rear of the vehicle. The battery pack may be configured to supply power to the vehicle. For example, the battery pack may be used as an operational power supply for the vehicle. The vehicle may further include a controller and a motor. The controller may be configured to control the battery pack to supply power to the motor. For example, the battery pack may be configured to meet power requirements of start, navigation, and driving of the vehicle.

In some embodiments of this disclosure, the battery pack can be used as not only the operational power supply for the vehicle but also a driving power supply for the vehicle, replacing all or a part of fossil fuel or natural gas to provide driving traction for the vehicle. In some embodiments, the battery pack can also be used for energy storage devices.

The battery pack includes one or more battery cells 600.

There may be a plurality of battery cells 600. The plurality of battery cells 600 may be connected in series, parallel, or series-parallel, where being connected in series-parallel means a combination of series and parallel connections of the plurality of battery cells 600. The plurality of battery cells 600 may be directly connected in series, parallel, or series-parallel, and then an entirety of the plurality of battery cells 600 is placed in a box. Certainly, the plurality of battery cells 600 may alternatively be first connected in series, parallel, or series-parallel to form a battery module, and then a plurality of battery modules are connected in series, parallel, or series-parallel to form an entirety, and the entirety formed by the plurality of battery modules connected in series, parallel, or series-parallel is placed in a box. The battery pack may further include other structures. For example, the battery pack may further include a busbar configured to implement electrical connection between the plurality of battery cells 600.

The battery cell 600 is a basic unit that can implement mutual conversion between chemical energy and electric energy.

In the embodiments of this disclosure, the battery cell 600 may be a secondary battery. The secondary battery is a battery cell 600 that can be charged after being discharged to activate active materials for continuous use.

In the embodiments of this disclosure, the battery cell 600 may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead battery, or the like. This is not limited in the embodiments of this disclosure.

For a battery production line in the embodiments of this disclosure, refer to FIG. 1 to FIG. 4. The battery production line includes a conveying apparatus 400, a grabbing device, a stacking table 500, and a transfer device. The conveying apparatus 400 is configured to convey a battery cell 600. The grabbing device is configured to grab the battery cell 600 conveyed by the conveying apparatus 400. The stacking table 500 is configured to receive the battery cell 600 grabbed by the grabbing device from the conveying apparatus 400, to pre-stack the battery cell 600. The transfer device is configured to drive the grabbing device to reciprocate between the conveying apparatus 400 and the stacking table 500.

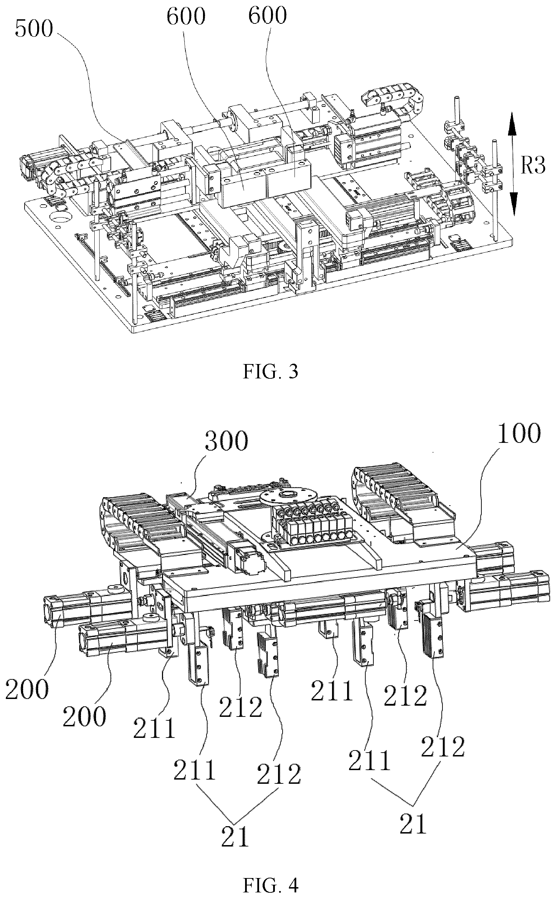

For the grabbing device in the embodiments of this disclosure, refer to FIG. 4, FIG. 5, and FIG. 7. The grabbing device includes a frame 100, clamping assemblies 200, and a drive assembly 300. The clamping assemblies 200 are arranged on the frame 100. There are at least two clamping assemblies 200. Each clamping assembly 200 includes a base 1 and a clamping module 2. At least two clamping assemblies 200 are arranged along a second direction. The second direction intersects with a first direction. The clamping module 2 is arranged on the base 1. Each clamping assembly 200 has at least one clamping module 2. Each clamping module 2 of each clamping assembly 200 and a corresponding clamping module 2 of another corresponding clamping assembly 200 are arranged along the second direction. The drive assembly 300 is arranged on the frame 100. The drive assembly 300 is configured to drive one clamping assembly 200 to move relative to another clamping assembly 200 along the second direction.

In the embodiments of this disclosure, the drive assembly 300 drives one clamping assembly 200 to move relative to another clamping assembly 200, so that a distance between each clamping module 2 of each clamping assembly 200 and a corresponding clamping module 2 of another corresponding clamping assembly 200 along the second direction can be adjusted, to clamp battery cells 600 at different spacings on the same conveying apparatus 400.

For example, the grabbing device may be configured to grab assembled battery cells 600 on the conveying apparatus 400.

For example, the assembled battery cells 600 mainly include two battery cells 600. For example, the grabbing device is configured to grab single-row-assembled battery cells 600 on the conveying apparatus 400, or the grabbing device is configured to grab double-row-assembled battery cells 600 on the conveying apparatus 400.

For the clamping module 2 in the embodiments of this disclosure, refer to FIG. 5, FIG. 8, and FIG. 9. The clamping module 2 includes a clamping jaw 21, a first drive component 22, a mounting base 23, an elastic member 24, and a second drive component 25. The clamping jaw 21 includes a first clamping piece 211 and a second clamping piece 212 that are arranged opposite each other. A direction in which the first clamping piece 211 and the second clamping piece 212 are arranged opposite each other is the first direction. The first drive component 22 is configured to drive the first clamping piece 211 to move along the first direction. The mounting base 23 is arranged on the second clamping piece 212. The second clamping piece 212 is able to move relative to the mounting base 23 along the first direction. The mounting base 23 is provided with a force applying portion 231 that is spaced away from the second clamping piece 212. The elastic member 24 is in contact with the second clamping piece 212 and the force applying portion 231, to enable the force applying portion 231 to apply an acting force to the second clamping piece 212 through the elastic member 24. The second drive component 25 is configured to drive the mounting base 23 to move along the first direction, so that a direction of an acting force applied by the elastic member 24 to the second clamping piece 212 is toward the first clamping piece 211.

The first drive component 22 drives the first clamping piece 211 to move, and the second drive component 25 drives the mounting base 23 to move, to enable the second clamping piece 212 to move correspondingly. The first drive component 22 and the second drive component 25 may independently perform driving, so that the first clamping piece 211 and the second clamping piece 212 independently move correspondingly.

For example, according to an actual requirement, the first drive component 22 may drive the first clamping piece 211 to move, but the second drive component 25 does not drive the mounting base 23 to move.

For example, according to an actual requirement, the second drive component 25 needs to drive the second clamping piece 212 to move, but the first drive component 22 does not drive the first clamping piece 211 to move.

For example, the elastic member 24 may be a spring.

For example, as shown in FIG. 4, FIG. 5, and FIG. 7, the first drive component 22, the second drive component 25, the first clamping piece 211, and the mounting base 23 are all arranged on the base 1, the first drive component 22 drives the first clamping piece 211 to move relative to the base 1, and the second drive component 25 drives the mounting base 23 to move relative to the base 1.

In the embodiments of this disclosure, before the clamping jaw 21 clamps the battery cell 600, the battery cell 600 is located between the first clamping piece 211 and the second clamping piece 212 along the first direction, and the battery cell 600 is spaced away from the first clamping piece 211 and the second clamping piece 212 by a specific distance along the first direction. In this way, in a process in which the clamping jaw 21 moves downward to a position at which the battery cell 600 can be grabbed, a possibility that the first clamping piece 211 and the second clamping piece 212 press against the battery cell 600 and cause damage to the battery cell 600 can be reduced. Because the battery cell 600 is spaced away from the first clamping piece 211 and the second clamping piece 212 by a specific distance along the first direction, the first drive component 22 needs to drive the first clamping piece 211 to move along the first direction to a position for contact with the battery cell 600, and the second drive component 25 needs to drive the mounting base 23 to move along the first direction to enable the second clamping piece 212 to move to a position for contact with the battery cell 600. When the battery cell 600 is in contact with the first clamping piece 211 and the second clamping piece 212, the first drive component 22 stops driving the first clamping piece 211 to move along the first direction, and the second drive component 25 drives the mounting base 23 to move toward the first clamping piece 211, so that the force applying portion 231 of the mounting base 23 gradually increases, through the elastic member 24, an acting force applied to the second clamping piece 212. A clamping force applied by the first clamping piece 211 and the second clamping piece 212 to clamp the battery cell 600 is gradually increased to a required clamping force through buffering and adjustment by the elastic member 24, to reduce a possibility that the clamping force applied by the first clamping piece 211 and the second clamping piece 212 to the battery cell 600 is excessively large and causes damage to the battery cell 600. In addition, the second drive component 25 drives the mounting base 23 to move to gradually increase the clamping force, so that the battery cell 600 can be stably clamped. In a process in which the second drive component 25 drives the mounting base 23 to move toward the first clamping piece 211 to enable the force applying portion 231 of the mounting base 23 to gradually increase, through the elastic member 24, the acting force applied to the second clamping piece 212, because the first drive component 22 drives the first clamping piece 211 to move and no corresponding elastic member 24 is arranged between the first drive component 22 and the first clamping piece 211, the first drive component 22 rigidly drives the first clamping piece 211, and a position to which the first drive component 22 performs driving determines a position of the first clamping piece 211. This can reduce shaking of the battery cell 600 clamped between the first clamping piece 211 and the second clamping piece 212, and help stably clamp the battery cell 600.

In an embodiment, as shown in FIG. 5, FIG. 6, FIG. 8, and FIG. 9, the force applying portion 231 is located on a side of the second clamping piece 212 that is away from the first clamping piece 211 along the first direction.

In this embodiment of this disclosure, when the second clamping piece 212 is in contact with the battery cell 600, the second drive component 25 still needs to drive the mounting base 23 to move toward the first clamping piece 211 relative to the second clamping piece 212, to increase an amount of compression of the elastic member 24 and therefore increase an acting force applied by the elastic member 24 to the second clamping piece 212. Therefore, specific space needs to be reserved on the side of the second clamping piece 212 that is away from the first clamping piece 211 along the first direction, so that the mounting base 23 can move toward the first clamping piece 211 relative to the second clamping piece 212, and the side of the second clamping piece 212 that is away from the first clamping piece 211 along the first direction is definitely spaced away from the mounting base 23. Because the force applying portion 231 is located on the side of the second clamping piece 212 that is away from the first clamping piece 211 along the first direction, the elastic member 24 is at least partially located on the side of the second clamping piece 212 that is away from the first clamping piece 211 along the first direction. In this way, space originally formed between the mounting base 23 and the side of the second clamping piece 212 that is away from the first clamping piece 211 along the first direction is fully utilized, so that space utilization is improved, and overall space occupied by the mounting base 23, the second clamping piece 212, and the elastic member 24 is reduced.

In an embodiment, as shown in FIG. 5, FIG. 6, FIG. 8, and FIG. 9, the mounting base 23 is further provided with a position limiting portion 232, the position limiting portion 232 is located on a side of the force applying portion 231 that faces the first clamping piece 211 along the first direction, the second clamping piece 212 is located between the position limiting portion 232 and the force applying portion 231 along the first direction, and the second clamping piece 212 abuts against the position limiting portion 232 under the action of an elastic force of the elastic member 24.

In this embodiment of this disclosure, the second clamping piece 212 is pressed against the position limiting portion 232 by the elastic force of the compressed elastic member 24, so that shaking of the second clamping piece 212 between the position limiting portion 232 and the elastic member 24 is reduced.

In an embodiment, as shown in FIG. 5, FIG. 6, FIG. 8, and FIG. 9, the elastic member 24 is located on a side of the second clamping piece 212 that is away from the position limiting portion 232, and the elastic member 24 is located between the second clamping piece 212 and the force applying portion 231.

In this embodiment of this disclosure, two ends of the elastic member 24 respectively abut against the second clamping piece 212 and the force applying portion 231. To be specific, an acting force applied by the force applying portion 231 can be transferred to the second clamping piece 212 through the elastic member 24. This helps simplify a mounting structure of the elastic member 24. The elastic member 24 is located between the second clamping piece 212 and the force applying portion 231. The elastic member 24 is neither located on a side of the second clamping piece 212 that is away from the force applying portion 231 nor located on a side of the force applying portion 231 that is away from the second clamping piece 212. The elastic member 24 is fully located in space originally formed between the force applying portion 231 and a side of the second clamping piece 212 that is away from the first clamping piece 211, and the space between the force applying portion 231 and the side of the second clamping piece 212 that is away from the first clamping piece 211 is fully utilized to accommodate the elastic member 24, so that space utilization is improved.

In an embodiment, as shown in FIG. 4, FIG. 5, FIG. 7, and FIG. 8, each clamping assembly 200 has a plurality of clamping modules 2, and clamping jaws 21 of the plurality of clamping modules 2 are arranged at spacings along the first direction.

In this embodiment of this disclosure, among the plurality of clamping modules 2 arranged at spacings along the first direction, each clamping module 2 correspondingly grabs a battery cell 600 on a conveying apparatus 400, and the plurality of clamping modules 2 may jointly grab battery cells 600 on a plurality of conveying apparatuses 400, so that efficiency of grabbing battery cells 600 is improved.

In an embodiment, as shown in FIG. 4, FIG. 5, FIG. 7, and FIG. 8, each clamping assembly 200 has two clamping modules 2, two second clamping pieces 212 corresponding to the two clamping modules 2 are located between two first clamping pieces 211 along the first direction, two corresponding mounting bases 23 are located between the two first clamping pieces 211 along the first direction, and the second drive component 25 is located on a side of the mounting base 23 along the second direction.

In this embodiment of this disclosure, two corresponding mounting bases 23 are located between two first clamping pieces 211 along the first direction, the second drive component 25 is located on a side of the mounting base 23 along the second direction, and a spacing between the two mounting bases 23 at limiting positions away from the first clamping pieces 211 along the first direction can be arranged to be small, to help reduce an overall size of the grabbing device along the first direction.

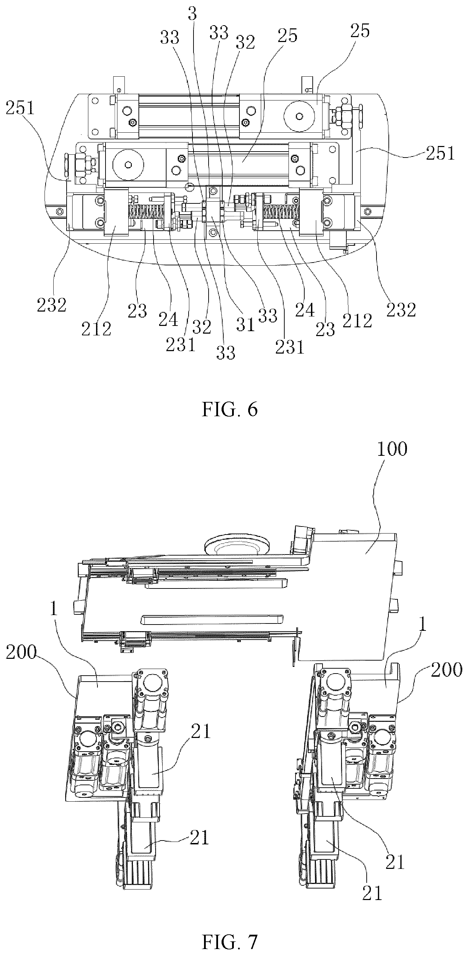

In an embodiment, as shown in FIG. 5 and FIG. 6, a second drive component 25 of a clamping module 2 of each clamping assembly 200 is located on a side of a corresponding mounting base 23 that is away from another corresponding clamping assembly 200 along the second direction, and two second drive components 25 corresponding to two clamping modules 2 are located between two first clamping pieces 211 along the first direction.

In this embodiment of this disclosure, a second drive component 25 of a clamping module 2 of each clamping assembly 200 is located on a side of a corresponding mounting base 23 that is away from another corresponding clamping assembly 200 along the second direction, and the two clamping assemblies 200 can approach each other as close as possible along the second direction. This helps grab battery cells 600 at different spacings on the same conveying apparatus 400 within a larger spacing range.

In an embodiment, as shown in FIG. 6, a drive portion 251 is formed at an end of each second drive component 25 that faces a corresponding first clamping piece 211, the drive portion 251 is connected to an end of a corresponding mounting base 23 that faces a corresponding first clamping piece 211, and two second drive components 25 are located between two drive portions 251 along the first direction.

The second drive component 25 drives the mounting base 23 to move along the first direction. A size of the second drive component 25 along the first direction is large.

In this embodiment of this disclosure, the two second drive components 25 are located between the two drive portions 251 along the first direction, and the size of the second drive component 25 along the first direction is large, so that a spacing between the two drive portions 251 along the first direction is large, and a region between the two drive portions 251 spaced apart along the first direction is large. The mounting base 23 moves relative to the second clamping piece 212, and a size of the mounting base 23 along the first direction is large. Because the drive portion 251 is connected to an end of a corresponding mounting base 23 that faces a corresponding first clamping piece 211, two mounting bases 23 with large sizes along the first direction can be arranged in a region between two drive portions 251 along the first direction, so that the region between the two drive portions 251 spaced apart along the first direction can be fully utilized, to improve space utilization.

In an embodiment, as shown in FIG. 5, FIG. 6, and FIG. 8, the clamping assembly 200 further includes a stop mechanism 3, the stop mechanism 3 is located between two mounting bases 23 along the first direction, and the stop mechanism 3 is able to abut against the two mounting bases 23 along the first direction to prevent the two mounting bases 23 from approaching each other.

In this embodiment of this disclosure, the stop mechanism 3 between the two mounting bases 23 abuts against the two mounting bases 23 along the first direction to prevent the two mounting bases 23 from approaching each other, so that a spacing between the two mounting bases 23 abutting against the stop mechanism 3 reaches a minimum spacing that is possible between the two mounting bases 23, and a possibility of interference between the two mounting bases 23 due to approaching is reduced.

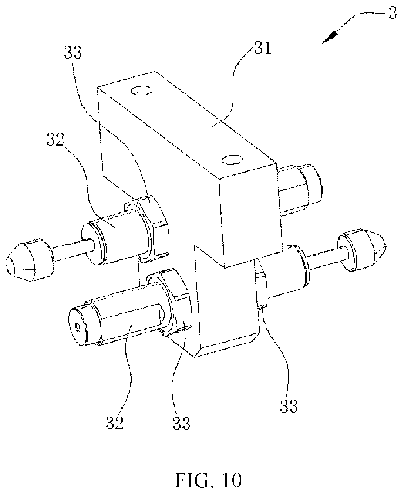

In an embodiment, as shown in FIG. 10, the stop mechanism 3 includes a supporting base 31, a stop rod 32, and a locking piece 33. The supporting base 31 is connected to the base 1. The stop rod 32 passes through the supporting base 31. Each mounting base 23 is correspondingly provided with the stop rod 32, and the stop rod 32 is configured to abut against a corresponding mounting base 23. The locking piece 33 is in threaded connection to a corresponding stop rod 32. Each stop rod 32 is correspondingly provided with two locking pieces 33. One locking piece 33 is located on a side of the supporting base 31 along the first direction, and the other locking piece 33 is located on the other side of the supporting base 31 along the first direction.

For example, the locking piece 33 is a nut.

In this embodiment of this disclosure, a stop rod 32 corresponding to each mounting base 23 passes through the supporting base 31, and two side locking pieces 33 corresponding to each stop rod 32 are in threaded connection to the stop rod 32, so that the stop rod 32 is fastened to the supporting base 31. When one stop rod 32 is damaged, the corresponding stop rod 32 may be removed and replaced with a new stop rod 32, without replacing the entire stop mechanism 3. This helps reduce maintenance costs.

In an embodiment, as shown in FIG. 4, FIG. 5, and FIG. 7, a base 1 of one clamping assembly 200 is connected to the frame 100, and a base 1 of another clamping assembly 200 is movably arranged on the frame 100.

For example, as shown in FIG. 7, a base 1 of a clamping assembly 200 on the left in the figure is movably arranged on the frame 100, and a base 1 of a clamping assembly 200 on the right in the figure is connected to the frame 100.

In this embodiment of this disclosure, because a base 1 of one clamping assembly 200 is connected to the frame 100, the corresponding clamping assembly 200 does not move relative to the base 1. This helps simplify an assembly structure between the corresponding clamping assembly 200 and the base 1. One of two clamping assemblies 200 moves relative to the base 1, and the other clamping assembly 200 does not move relative to the base 1, so that one clamping assembly 200 can move relative to the other clamping assembly 200, and an assembly structure between the clamping assemblies 200 and the base 1 can also be simplified.

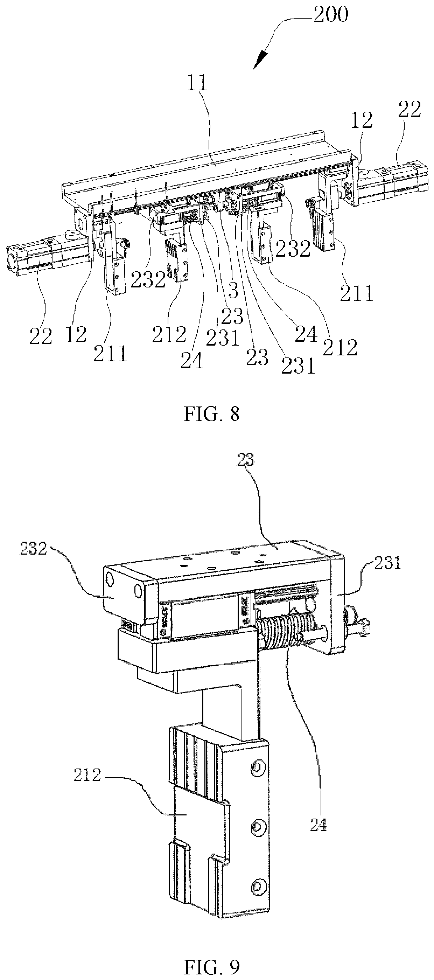

In an embodiment, as shown in FIG. 5 and FIG. 8, the base 1 includes a main base 11 and a position limiting base 12. The second drive component 25, the first clamping piece 211, and the mounting base 23 are all arranged on the main base 11. The position limiting base 12 is connected to the main base 11. Both the position limiting base 12 and the first drive component 22 are located on a side of the first clamping piece 211 that is away from the second clamping piece 212 along the first direction. The first drive component 22 is mounted on the position limiting base 12, and the first drive component 22 is able to drive the first clamping piece 211 to move to abut against the position limiting base 12.

In this embodiment of this disclosure, the position limiting base 12 is located at an end of the first clamping piece 211 that is away from the second clamping piece 212, and the position limiting base 12 can abut against the first clamping piece 211 for position limiting, to prevent the first clamping piece 211 from excessively moving away from the second clamping piece 212 by a long distance. The first drive component 22 is mounted on the position limiting base 12 located on the side of the first clamping piece 211 that is away from the second clamping piece 212. This facilitates mounting of the first drive component 22. In addition, the first drive component 22 mounted on the position limiting base 12 is located on the side of the first clamping piece 211 that is away from the second clamping piece 212, so that the first drive component 22 can smoothly push the first clamping piece 211 to move along the first direction.

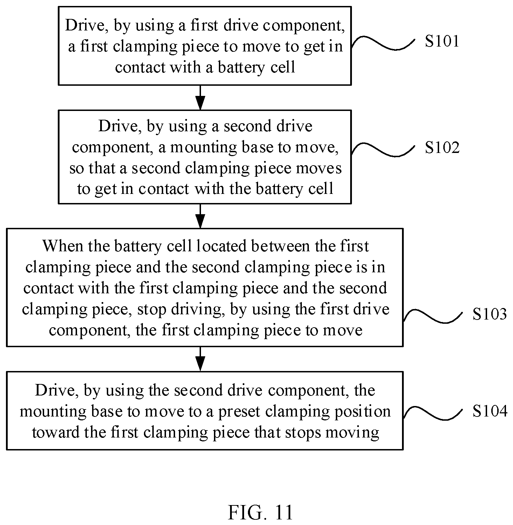

An embodiment of this disclosure provides a clamping method. As shown in FIG. 11, the clamping method includes the following steps.

Step S101: Drive, by using a first drive component, a first clamping piece to move to get in contact with a battery cell.

Step S102: Drive, by using a second drive component, a mounting base to move, so that a second clamping piece moves to get in contact with the battery cell.

Step S103: When the battery cell located between the first clamping piece and the second clamping piece is in contact with the first clamping piece and the second clamping piece, stop driving, by using the first drive component, the first clamping piece to move.

Step S104: Drive, by using the second drive component, the mounting base to move to a preset clamping position toward the first clamping piece that stops moving.

For example, step S101 and step S102 may be simultaneously performed to clamp the battery cell in a centered manner, and the first clamping piece and the second clamping piece get in contact with the battery cell at approximately the same time.

For example, step S101 may be performed before step S102.

For example, step S102 may be performed before step S101.

In this embodiment of this disclosure, when the battery cell 600 is in contact with the first clamping piece 211 and the second clamping piece 212, the battery cell 600 is in a pre-clamped state, and the first clamping piece 211 and the second clamping piece 212 have not completely clamped the battery cell 600. When the battery cell 600 is in contact with the first clamping piece 211 and the second clamping piece 212, the first drive component 22 stops driving the first clamping piece 211 to move, to prevent the first clamping piece 211 from being pushed by the first drive component 22 to press against the battery cell 600. When the battery cell 600 is in contact with the first clamping piece 211 and the second clamping piece 212, the second drive component 25 drives the mounting base 23 to move to the preset clamping position toward the first clamping piece 211 that stops moving. As the mounting base 23 moves toward the first clamping piece 211, deformation of an elastic member 24 gradually increases, so that a clamping force applied by a force applying portion 231 of the mounting base 23 to the second clamping piece 212 through the elastic member 24 and a reaction force applied by the first clamping piece 211 to the battery cell 600 increase. To be specific, a clamping force applied by the first clamping piece 211 and the second clamping piece 212 to clamp the battery cell 600 gradually increases. This helps reduce a possibility that the first clamping piece 211 and the second clamping piece 212 cause damage to the battery cell 600 in a process of clamping the battery cell 600. In addition, no deformable buffer component is arranged between the first clamping piece 211 and the first drive component 22, and a position to which the first drive component 22 performs driving determines a position of the first clamping piece 211. When the first drive component 22 stops driving the first clamping piece 211 to move, the position of the first clamping piece 211 no longer changes, so that the first clamping piece 211 can well limit a position of the clamped battery cell 600. This can reduce shaking of the clamped battery cell 600, and help stably clamp the battery cell 600.

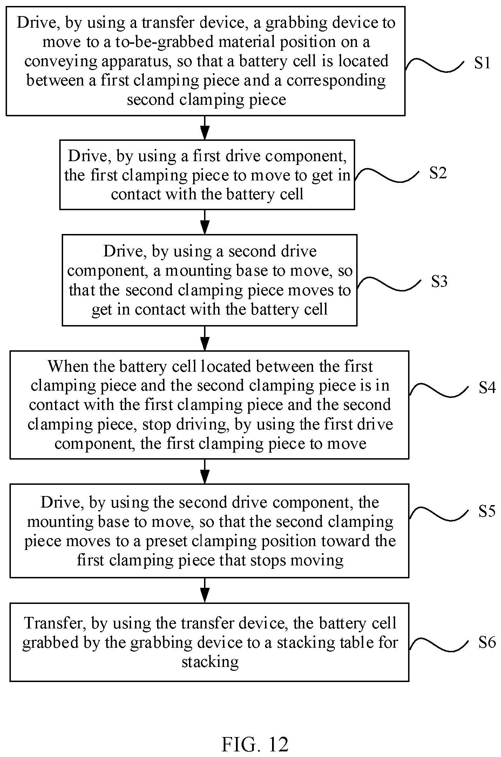

An embodiment of this disclosure provides a transfer method. As shown in FIG. 12, the method includes the following steps.

Step S1: Drive, by using a transfer device, a grabbing device to move to a to-be-grabbed material position on a conveying apparatus, so that a battery cell is located between a first clamping piece and a corresponding second clamping piece.

Step S2: Drive, by using a first drive component, the first clamping piece to move to get in contact with the battery cell.

Step S3: Drive, by using a second drive component, a mounting base to move, so that the second clamping piece moves to get in contact with the battery cell.

Step S4: When the battery cell located between the first clamping piece and the second clamping piece is in contact with the first clamping piece and the second clamping piece, stop driving, by using the first drive component, the first clamping piece to move.

Step S5: Drive, by using the second drive component, the mounting base to move, so that the second clamping piece moves to a preset clamping position toward the first clamping piece that stops moving.

Step S6: Transfer, by using the transfer device, the battery cell grabbed by the grabbing device to a stacking table for stacking.

For example, FIG. 9 shows a state in which single-row-assembled battery cells 600 are stacked on the stacking table 500.

For example, FIG. 10 shows a state in which double-row-assembled battery cells 600 are stacked on the stacking table 500.

In this embodiment of this disclosure, the transfer device drives the grabbing device to move to the to-be-grabbed material position, to prepare to grab the battery cell 600 on the conveying apparatus 400. The first drive component 22 and the second drive component 25 independently perform driving, so that the first clamping piece 211 and the second clamping piece 212 can stably clamp the battery cell 600 while reducing a possibility of causing damage to the clamped battery cell 600. Therefore, the grabbing device can stably grab the battery cell 600 on the conveying apparatus 400 while reducing damage to the battery cell 600, and transfer the grabbed battery cell 600 to the stacking table 500 for stacking. In this way, the battery cell 600 on the conveying apparatus 400 can be well transferred to the stacking table 500.

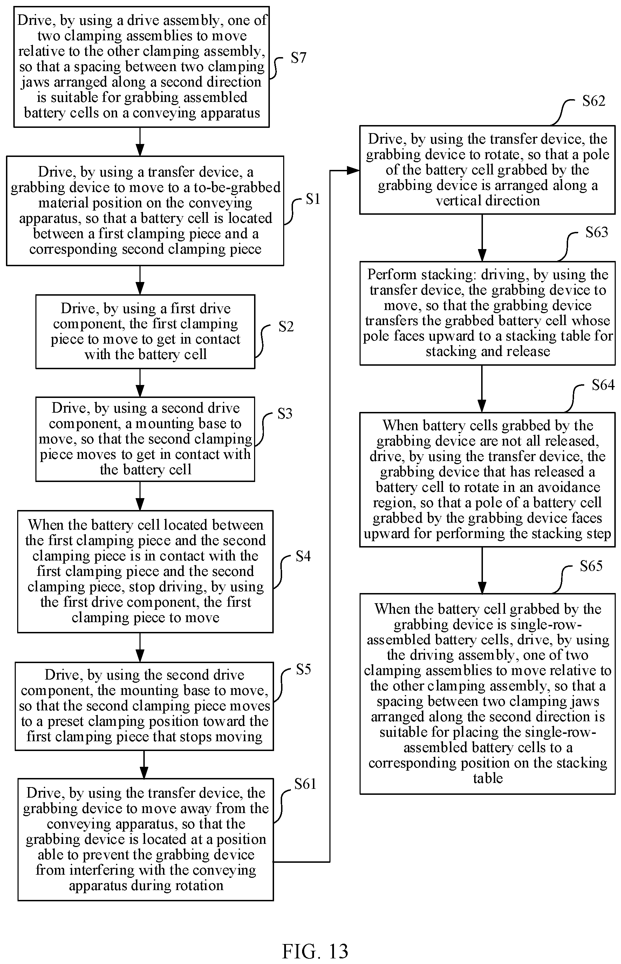

In an embodiment, as shown in FIG. 13, the transfer method further includes the following step:
Step S7: Drive, by using a drive assembly, one of two clamping assemblies to move relative to the other clamping assembly, so that a spacing between two clamping jaws arranged along a second direction is suitable for grabbing assembled battery cells on the conveying apparatus.

The assembled battery cells 600 may have a variety of specifications. For assembled battery cells 600 with different specifications, a spacing required between the two clamping jaws 21 may vary.

For example, the assembled battery cells 600 may be single-row-assembled battery cells 600 or double-row-assembled battery cells 600. A spacing required between the two clamping jaws 21 arranged along the second direction for single-row-assembled battery cells 600 is a first spacing. A spacing required between the two clamping jaws 21 arranged along the second direction for double-row-assembled battery cells 600 is a second spacing. The first spacing and the second spacing are unequal.

For example, two groups of single-row-assembled battery cells 600 with different specifications may require different spacings between the two clamping jaws 21, or two groups of double-row-assembled battery cells 600 with different specifications may require different spacings between the two clamping jaws 21. For example, a spacing required between the two clamping jaws 21 for one group of single-row-assembled battery cells 600 is a third spacing, and a spacing required between the two clamping jaws 21 for the other group of single-row-assembled battery cells 600 is a third spacing, where the third spacing and the fourth spacing are unequal.

In this embodiment of this disclosure, the drive assembly 300 drives one clamping assembly 200 to move relative to another clamping assembly 200, so that a spacing between two clamping modules 2 arranged along the second direction can be changed, and a spacing between two clamping jaws 21 arranged along the second direction is adjusted. In this way, the spacing between the two clamping jaws 21 arranged along the second direction can be suitable for respectively grabbing two assembled battery cells 600 on the conveying apparatus 400.

In an embodiment, as shown in FIG. 8, there are two conveying apparatuses 400, the two conveying apparatuses 400 are arranged in parallel, each clamping assembly 200 has two clamping modules 2, the two clamping modules 2 of each clamping assembly 200 are in a one-to-one correspondence to the conveying apparatuses 400, and a pole of a battery cell 600 on each conveying apparatus 400 faces the other corresponding conveying apparatus 400.

It should be noted that the two conveying apparatuses 400 are arranged in parallel, and an arrangement direction of the two conveying apparatuses 400 intersects with a conveying direction of the conveying apparatuses 400.

For example, the arrangement direction of the two conveying apparatuses 400 is perpendicular to the conveying direction.

Two clamping modules 2 of each clamping assembly 200 are in a one-to-one correspondence to the conveying apparatuses 400. One of two clamping modules 2 of each clamping assembly 200 is configured to grab a battery cell 600 on one conveying apparatus 400, and the other clamping module 2 is configured to grab a battery cell 600 on the other conveying apparatus 400.

In this embodiment of this disclosure, a pole of a battery cell 600 on each conveying apparatus 400 faces the other corresponding conveying apparatus 400. Therefore, when two clamping modules 2 of each clamping assembly 200 respectively grab battery cells 600 on the two conveying apparatuses 400, a pole of a battery cell 600 clamped by each of the two clamping modules 2 faces the other clamping module 2. When poles of battery cells 600 clamped by two clamping modules 2 of each clamping assembly 200 are arranged along a vertical direction, because a pole of a battery cell 600 clamped by each of the two clamping modules 2 faces the other corresponding clamping module 2, a pole of a battery cell 600 clamped by one clamping module 2 inevitably faces upward. The grabbing device rotates, so that positions of two clamping modules 2 of each clamping assembly 200 along the vertical direction can be interchanged, and a pole of a battery cell 600 clamped by the other clamping module 2 can be adjusted to face upward.

In an embodiment, as shown in FIG. 13, the transferring, by using the transfer device, the battery cell grabbed by the grabbing device to a stacking table for stacking includes the following steps:
Step S61: Drive, by using the transfer device, the grabbing device to move away from the conveying apparatus, so that the grabbing device is located at a position able to prevent the grabbing device from interfering with the conveying apparatus during rotation.
Step S62: Drive, by using the transfer device, the grabbing device to rotate, so that a pole of the battery cell grabbed by the grabbing device is arranged along a vertical direction.
Step S63: Perform stacking: Drive, by using the transfer device, the grabbing device to move, so that the grabbing device transfers the grabbed battery cell whose pole faces upward to the stacking table for stacking and release.
Step S64: When battery cells grabbed by the grabbing device are not all released, drive, by using the transfer device, the grabbing device that has released a battery cell to rotate in an avoidance region, so that a pole of a battery cell grabbed by the grabbing device faces upward for performing the stacking step.

The avoidance region is mainly used for avoiding the stacking table 500. The grabbing device rotates in the avoidance region, so that interference between the grabbing device and the stacking table 500 can be avoided.

In this embodiment of this disclosure, the transfer device drives the grabbing device to move away from the conveying apparatus 400, to prevent the grabbing device from interfering with the conveying apparatus 400 during rotation. Because a pole of a battery cell 600 on each conveying apparatus 400 faces the other corresponding conveying apparatus 400, poles of battery cells 600 on the conveying apparatuses 400 are approximately arranged along a horizontal direction. However, a pole of a battery cell 600 to be stacked on the stacking table 500 needs to face upward. The transfer device drives the grabbing device to rotate, so that a pole of a battery cell 600 grabbed by the grabbing device is arranged along the vertical direction. Because poles of battery cells 600 clamped by two clamping modules 2 of each clamping assembly 200 face different directions, a pole of at least one of two battery cells 600 arranged along the vertical direction faces upward. The transfer device may drive the grabbing device to move, to transfer a battery cell 600 whose pole faces upward to the stacking table 500 for stacking, and a corresponding clamping jaw 21 may be released to release a stacked battery cell 600. A battery cell 600 clamped by one of two clamping modules 2 of each clamping assembly 200 is stacked and released, and the other clamping module 2 is still clamping a battery cell 600. Battery cells 600 grabbed by the grabbing device are not all released. The transfer device drives the grabbing device that has released a battery cell 600 to rotate in the avoidance region, so that a pole of a battery cell 600 grabbed by the grabbing device faces upward. Through rotation of the grabbing device, a pole of a battery cell 600 that has not been released by the grabbing device switches from downward arrangement to upward arrangement. Then a stacking step is performed again, so that a battery cell 600 whose pole faces upward moves to the stacking table 500 for stacking and release. In this way, transfer and release of all battery cells 600 on the grabbing device are completed.

In an embodiment, as shown in FIG. 13, the transferring, by using the transfer device, the battery cell grabbed by the grabbing device to a stacking table for stacking further includes the following step:
Step S65: When the battery cell grabbed by the grabbing device is single-row-assembled battery cells, drive, by using the drive assembly, one of two clamping assemblies to move relative to the other clamping assembly, so that a spacing between two clamping jaws arranged along the second direction is suitable for placing the single-row-assembled battery cells to a corresponding position on the stacking table.

In this embodiment of this disclosure, for single-row-assembled battery cells 600, a spacing between two single-row-assembled battery cells 600 on the conveying apparatus 400 is different from a spacing between the two single-row-assembled battery cells 600 on the stacking table 500. In a process in which the grabbing device grabs single-row-assembled battery cells 600 from the conveying apparatus 400 and transfers the battery cells 600 to the stacking table 500, the drive assembly 300 drives one of two clamping assemblies 200 to move relative to the other clamping assembly 200, to adjust a spacing between two clamping jaws 21 arranged along the second direction. Correspondingly, a spacing between battery cells 600 clamped by the two clamping jaws 21 arranged along the second direction is changed, so that the spacing between the battery cells 600 clamped by the two clamping jaws 21 arranged along the second direction can match a position for placing two single-row-assembled battery cells 600 on the stacking table 500.

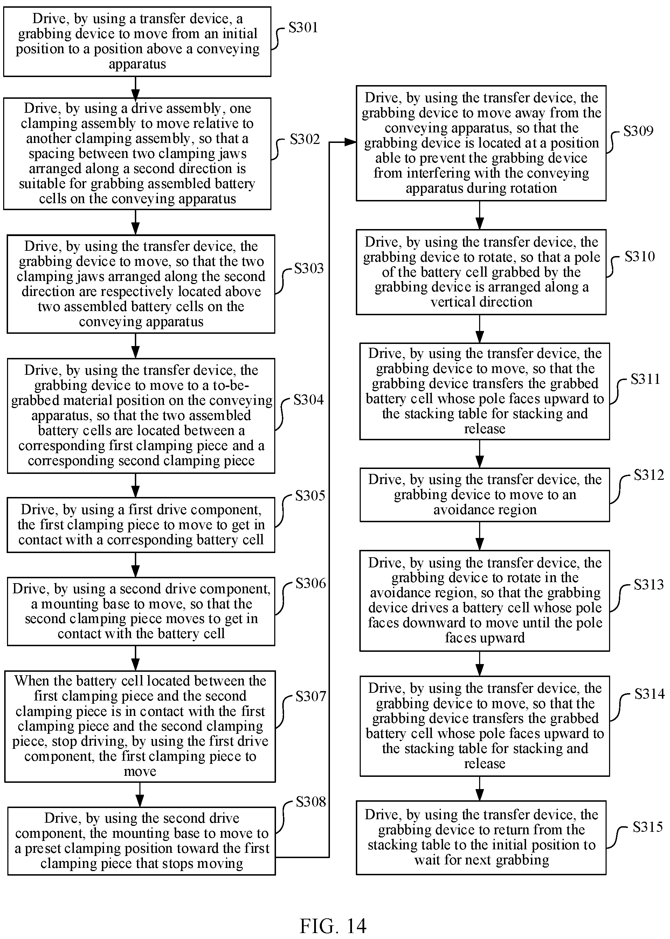

As shown in FIG. 14, a specific process of transferring a battery cell 600 by using the transfer method in the embodiments of this disclosure is as follows.

Step S301: Drive, by using a transfer device, a grabbing device to move from an initial position to a position above a conveying apparatus.

Step S302: Drive, by using a drive assembly, one clamping assembly to move relative to another clamping assembly, so that a spacing between two clamping jaws arranged along a second direction is suitable for grabbing assembled battery cells on the conveying apparatus.

Step S303: Drive, by using the transfer device, the grabbing device to move, so that the two clamping jaws arranged along the second direction are respectively located above two assembled battery cells on the conveying apparatus.

Step S304: Drive, by using the transfer device, the grabbing device to move to a to-be-grabbed material position on the conveying apparatus, so that the two assembled battery cells are located between a corresponding first clamping piece and a corresponding second clamping piece.

Step S305: Drive, by using a first drive component, the first clamping piece to move to get in contact with a corresponding battery cell.

Step S306: Drive, by using a second drive component, a mounting base to move, so that the second clamping piece moves to get in contact with the battery cell.

Step S307: When the battery cell located between the first clamping piece and the second clamping piece is in contact with the first clamping piece and the second clamping piece, stop driving, by using the first drive component, the first clamping piece to move.

Step S308: Drive, by using the second drive component, the mounting base to move to a preset clamping position toward the first clamping piece that stops moving.

Step S309: Drive, by using the transfer device, the grabbing device to move away from the conveying apparatus, so that the grabbing device is located at a position able to prevent the grabbing device from interfering with the conveying apparatus during rotation.

Step S310: Drive, by using the transfer device, the grabbing device to rotate, so that a pole of the battery cell grabbed by the grabbing device is arranged along a vertical direction.

Step S311: Drive, by using the transfer device, the grabbing device to move, so that the grabbing device transfers the grabbed battery cell whose pole faces upward to the stacking table for stacking and release.

Step S312: Drive, by using the transfer device, the grabbing device to move to an avoidance region.

Step S313: Drive, by using the transfer device, the grabbing device to rotate in the avoidance region, so that the grabbing device drives a battery cell whose pole faces downward to move until the pole faces upward.

Step S314: Drive, by using the transfer device, the grabbing device to move, so that the grabbing device transfers the grabbed battery cell whose pole faces upward to the stacking table for stacking and release.

Step S315: Drive, by using the transfer device, the grabbing device to return from the stacking table to the initial position to wait for next grabbing.

The foregoing embodiments are merely intended to describe the technical solutions of this disclosure, but not to limit this disclosure. Although this disclosure is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions in the embodiments of this disclosure. All such modifications and equivalent replacements shall fall within the scope of this disclosure. In particular, as long as there is no structural conflict, the various technical features mentioned in the embodiments can be combined in any manner.

### Industrial practicability

In a clamping module in the embodiments of this disclosure, before a clamping jaw clamps a battery cell, the battery cell is located between a first clamping piece and a second clamping piece along a first direction, and the battery cell is spaced away from the first clamping piece and the second clamping piece by a specific distance along the first direction. In this way, in a process in which the clamping jaw moves downward to a position at which the battery cell can be grabbed, a possibility that the first clamping piece and the second clamping piece press against the battery cell and cause damage to the battery cell can be reduced. Because the battery cell is spaced away from the first clamping piece and the second clamping piece by a specific distance along the first direction, a first drive component needs to drive the first clamping piece to move along the first direction to a position for contact with the battery cell, and a second drive component needs to drive a mounting base to move along the first direction to enable the second clamping piece to move to a position for contact with the battery cell. When the battery cell is in contact with the first clamping piece and the second clamping piece, the first drive component stops driving the first clamping piece to move along the first direction, and the second drive component drives the mounting base to move toward the first clamping piece, so that a force applying portion of the mounting base gradually increases, through an elastic member, an acting force applied to the second clamping piece. A clamping force applied by the first clamping piece and the second clamping piece to clamp the battery cell is gradually increased to a required clamping force through buffering and adjustment by the elastic member, to reduce a possibility that the clamping force applied by the first clamping piece and the second clamping piece to the battery cell is excessively large and causes damage to the battery cell. In addition, the second drive component drives the mounting base to move to gradually increase the clamping force, so that the battery cell can be stably clamped. In a process in which the second drive component drives the mounting base to move toward the first clamping piece to enable the force applying portion of the mounting base to gradually increase, through the elastic member, the acting force applied to the second clamping piece, because the first drive component drives the first clamping piece to move and no corresponding elastic member is arranged between the first drive component and the first clamping piece, the first drive component rigidly drives the first clamping piece, and a position to which the first drive component performs driving determines a position of the first clamping piece. This can reduce shaking of the battery cell clamped between the first clamping piece and the second clamping piece, and help stably clamp the battery cell.

## Claims

1. A clamping module, comprising:
a clamping jaw, comprising a first clamping piece and a second clamping piece that are arranged opposite each other, wherein a direction in which the first clamping piece and the second clamping piece are arranged opposite each other is a first direction;
a first drive component, configured to drive the first clamping piece to move along the first direction;
a mounting base arranged on the second clamping piece, wherein the second clamping piece is able to move relative to the mounting base along the first direction, and the mounting base is provided with a force applying portion that is spaced away from the second clamping piece;
an elastic member in contact with the second clamping piece and the force applying portion, to enable the force applying portion to apply an acting force to the second clamping piece through the elastic member; and
a second drive component, configured to drive the mounting base to move along the first direction, so that a direction of the acting force applied by the elastic member to the second clamping piece is toward the first clamping piece.

2. The clamping module according to claim 1, wherein the force applying portion is located on a side of the second clamping piece that is away from the first clamping piece along the first direction.

3. The clamping module according to claim 2, wherein the mounting base is further provided with a position limiting portion, the position limiting portion is located on a side of the force applying portion that faces the first clamping piece along the first direction, the second clamping piece is located between the position limiting portion and the force applying portion along the first direction, and the second clamping piece abuts against the position limiting portion under the action of an elastic force of the elastic member.

4. The clamping module according to claim 3, wherein the elastic member is located on a side of the second clamping piece that is away from the position limiting portion, and the elastic member is located between the second clamping piece and the force applying portion.

5. A grabbing device, comprising:
a frame;
clamping assemblies arranged on the frame, wherein there are at least two clamping assemblies, each clamping assembly comprises a base and the clamping module according to any one of claims 1 to 4, at least two clamping assemblies are arranged along a second direction, the second direction intersects with the first direction, the first drive component, the second drive component, the first clamping piece, and the mounting base are all arranged on the base, the first drive component drives the first clamping piece to move relative to the base, the second drive component drives the mounting base to move relative to the base, each clamping assembly has at least one clamping module, and each clamping module of each clamping assembly and a corresponding clamping module of another corresponding clamping assembly are arranged along the second direction; and
a drive assembly arranged on the frame, wherein the drive assembly is configured to drive one clamping assembly to move relative to another clamping assembly along the second direction.

6. The grabbing device according to claim 5, wherein each clamping assembly has a plurality of clamping modules, and clamping jaws of the plurality of clamping modules are arranged at spacings along the first direction.

7. The grabbing device according to claim 6, wherein each clamping assembly has two clamping modules, two second clamping pieces corresponding to the two clamping modules are located between two first clamping pieces along the first direction, two corresponding mounting bases are located between the two first clamping pieces along the first direction, and the second drive component is located on a side of the mounting base along the second direction.

8. The grabbing device according to claim 7, wherein a second drive component of a clamping module of each clamping assembly is located on a side of a corresponding mounting base that is away from another corresponding clamping assembly along the second direction, and two second drive components corresponding to two clamping modules are located between two first clamping pieces along the first direction.

9. The grabbing device according to claim 8, wherein a drive portion is formed at an end of each second drive component that faces a corresponding first clamping piece, the drive portion is connected to an end of a corresponding mounting base that faces a corresponding first clamping piece, and two second drive components are located between two drive portions along the first direction.

10. The grabbing device according to any one of claims 7 to 9, wherein the clamping assembly further comprises a stop mechanism, the stop mechanism is located between two mounting bases along the first direction, and the stop mechanism is able to abut against the two mounting bases along the first direction to prevent the two mounting bases from approaching each other.

11. The grabbing device according to claim 10, wherein the stop mechanism comprises:
a supporting base connected to the base;
a stop rod passing through the supporting base, wherein each mounting base is correspondingly provided with the stop rod, and the stop rod is configured to abut against a corresponding mounting base; and
a locking piece in threaded connection to a corresponding stop rod, wherein each stop rod is correspondingly provided with two locking pieces, one locking piece is located on a side of the supporting base along the first direction, and the other locking piece is located on the other side of the supporting base along the first direction.

12. The grabbing device according to any one of claims 5 to 11, wherein a base of one clamping assembly is connected to the frame, and a base of another clamping assembly is movably arranged on the frame.

13. The grabbing device according to any one of claims 5 to 12, wherein the base comprises:
a main base, wherein the second drive component, the first clamping piece, and the mounting base are all arranged on the main base; and
a position limiting base connected to the main base, wherein both the position limiting base and the first drive component are located on a side of the first clamping piece that is away from the second clamping piece along the first direction, the first drive component is mounted on the position limiting base, and the first drive component is able to drive the first clamping piece to move to abut against the position limiting base.

14. A battery production line, comprising:
a conveying apparatus, configured to convey a battery cell;
the grabbing device according to any one of claims 5 to 13, configured to grab the battery cell conveyed by the conveying apparatus;
a stacking table, configured to receive the battery cell grabbed by the grabbing device from the conveying apparatus, to pre-stack the battery cell; and
a transfer device, configured to drive the grabbing device to reciprocate between the conveying apparatus and the stacking table.

15. A clamping method, comprising:
driving, by using a first drive component, a first clamping piece to move to get in contact with a battery cell;
driving, by using a second drive component, a mounting base to move, so that a second clamping piece moves to get in contact with the battery cell;
when the battery cell located between the first clamping piece and the second clamping piece is in contact with the first clamping piece and the second clamping piece, stopping driving, by using the first drive component, the first clamping piece to move; and
driving, by using the second drive component, the mounting base to move to a preset clamping position toward the first clamping piece that stops moving.

16. A transfer method, comprising:
driving, by using a transfer device, a grabbing device to move to a to-be-grabbed material position on a conveying apparatus, so that a battery cell is located between a first clamping piece and a corresponding second clamping piece;
driving, by using a first drive component, the first clamping piece to move to get in contact with the battery cell;
driving, by using a second drive component, a mounting base to move, so that the second clamping piece moves to get in contact with the battery cell;
when the battery cell located between the first clamping piece and the second clamping piece is in contact with the first clamping piece and the second clamping piece, stopping driving, by using the first drive component, the first clamping piece to move;
driving, by using the second drive component, the mounting base to move, so that the second clamping piece moves to a preset clamping position toward the first clamping piece that stops moving; and
transferring, by using the transfer device, the battery cell grabbed by the grabbing device to a stacking table for stacking.

17. The transfer method according to claim 16, wherein the transfer method further comprises:
driving, by using a drive assembly, one of two clamping assemblies to move relative to the other clamping assembly, so that a spacing between two clamping jaws arranged along a second direction is suitable for grabbing assembled battery cells on the conveying apparatus.

18. The transfer method according to claim 16 or 17, wherein there are two conveying apparatuses, the two conveying apparatuses are arranged in parallel, each clamping assembly has two clamping modules, the two clamping modules of each clamping assembly are in a one-to-one correspondence to the conveying apparatuses, and a pole of a battery cell on each conveying apparatus faces the other corresponding conveying apparatus; and
the transferring, by using the transfer device, the battery cell grabbed by the grabbing device to a stacking table for stacking comprises:
driving, by using the transfer device, the grabbing device to move away from the conveying apparatus, so that the grabbing device is located at a position able to prevent the grabbing device from interfering with the conveying apparatus during rotation;
driving, by using the transfer device, the grabbing device to rotate, so that a pole of the battery cell grabbed by the grabbing device is arranged along a vertical direction;
performing stacking: driving, by using the transfer device, the grabbing device to move, so that the grabbing device transfers the grabbed battery cell whose pole faces upward to the stacking table for stacking and release; and
when battery cells grabbed by the grabbing device are not all released, driving, by using the transfer device, the grabbing device that has released a battery cell to rotate in an avoidance region, so that a pole of a battery cell grabbed by the grabbing device faces upward for performing the stacking step.

19. The transfer method according to claim 18, wherein the transferring, by using the transfer device, the battery cell grabbed by the grabbing device to a stacking table for stacking further comprises:
when the battery cell grabbed by the grabbing device is single-row-assembled battery cells, driving, by using the drive assembly, one of two clamping assemblies to move relative to the other clamping assembly, so that a spacing between two clamping jaws arranged along the second direction is suitable for placing the single-row-assembled battery cells to a corresponding position on the stacking table.
